# EUROPEAN PATENT SPECIFICATION

(11) **EP 2 260 084 B1**
(45) Date of publication and mention of the grant of the patent: **02.01.2013**
(21) Application number: 09728410.3
(22) Date of filing: 20.03.2009
(51) Int. Cl.: C09J 7/02

(54) **ADHESIVE STRUCTURE WITH LIQUID CRYSTALS**
HAFTSTRUKTUR MIT FLÜSSIGKRISTALLEN
STRUCTURE ADHÉSIVE AVEC DES CRISTAUX LIQUIDE

(30) Priority: 31.03.2008 BE 200800198
(43) Date of publication of application: 15.12.2010
(73) Proprietor: Morgan Adhesives Company, Stow, OH 44224-1898 (US)
(72) Inventor: STOCQ, Robert, Ghislain, F-59750 Feignies (FR)
(74) Representative: Strehlke, Ingo Kurt
(86) International application number: PCT/EP2009/002085
(87) International publication number: WO 2009/121498

(56) References cited:
- EP-A- 0 825 478
- WO-A-2007/066007
- FR-A- 2 751 097

## Description

The present invention relates to an adhesive structure permitting the opacification of a transparent support.

Opacifying adhesive structures provided for being placed, e.g., on windows in order to permit a certain intimacy are known.

For example, for the windows of conference rooms, bathrooms, offices, living-rooms, doctors' offices, when it is not desirable to expose the interior of these rooms to the view to all, the placing of opacifying adhesives simulating a sandy aspect of the glass is generally known.

Unfortunately, for example, in the case of a conference room or in a separation wall in offices or a dentist's or doctor's office it would be desirable if the glazed walls become transparent again in order to know whether or not the room or the zone is free or occupied or in order to let the daylight in again if necessary. However, in the case of known opacifying adhesives they can not be removed every time since the adhesives are intended to resist relatively extreme conditions (UV, frost, humidity ...) for a long time. For example, when a user places such an opacifying adhesive on the glass of a bathroom the adhesive should resist the high humidity of the room as well as the outside temperature, which can range from -20°C to +50°C, If the user wishes to see daylight, it is not possible to draw back the opacifying adhesive.

An alternative that was conceived is to place blinds. However, blinds accumulate dust (which is not always appropriate in hospital environments) and do not have an impeccable finished appearance.

Moreover, partition glasses are also known that are called intelligent partition glasses such as those disclosed by EP 823613, The partition glasses of EP 823613 comprise liquid crystals laminated in a double partition glass and comprise an electrochrome covering or a viologenic covering. Under the effect of a voltage the liquid crystals are oriented in a particular direction and render the partition glass transparent. When the voltage is no longer applied, the partition glass becomes opaque again. Unfortunately, such partition glasses are very expensive and their installation is very long and complex and the manipulating of these partition glasses, that are heavy and fragile, is a delicate step. Furthermore, such systems are not adequate for opacifying existing partition glasses, which means that if it is desired to modify a partition glass to make it sometimes opaque and sometimes transparent, it is then necessary to replace it. Furthermore, in certain cases it is absolutely impossible to place such partition glasses, for example, where walls of Plexiglas are advantageous as in conference rooms where the size can be enlarged or reduced with the aid of sliding Plexiglas panels. Such panels could not be of glass on account of their weight Likewise, a double partition glass is difficult to adapt to ambulances.

US 6055088 refers to a glazing, which includes at least one active layer and at least one reflecting coating on the active layer. A pane, partition, mirror, or door is also described that includes the glazing. A method for making is also disclosed. The glazing according to this document exhibits the disadvantage that it is not adequate for opacifying existing partition glasses, i.e. it is improper for a modification of existing glass panels or the like. Furthermore, it cannot be formed and bent, respectively, in any shape, especially not in a shape having a curved, convex, concave or an irregular surface.

FR 2 751 097 A1 refers to a unit with variable optical properties, which combines at least one system with variable light transmission/absorption, especially of the electrochromic or viologen type, with at least one system with variable light diffusion, especially of the optical valve type or with liquid crystals. The systems are electrically control-driven in order to modulate in a decorrelated manner the light transmission level and the light diffusion level of the unit.

WO 2007/066007 A1 relates to a method for transferring a micron-sized pattern onto a surface of an optical article. The method comprises the steps of (a) depositing a layer of at least one transferable material onto a surface of a stamp having a microrelief corresponding to the pattern to be transferred; (b) depositing a layer of a pressure-sensitive adhesive onto the surface of the substrate of the optical article; (c) bringing the surface of the stamp which comprises the layer of transferable material into contact with a layer of pressure-sensitive adhesive; (d) applying a pressure to the stamp; and (e) moving the stamp away from the surface of the optical article. This method is supposed to be suitable for producing patterns, in particular in the form of holograms on optical lenses, in particular ophthalmic lenses.

The invention has the task of resolving this problem by making available an adhesive structure that is economical, particularly easy to place, that can pass from the opaque state to the transparent state and that can be placed on any type of existing transparent support whether flat, curved, convex, concave or on any irregular surface.

Thus, according to a first aspect of the present invention, the present invention relates to an adhesive structure with liquid crystals according to Claim 1. Preferred embodiments of the adhesive structure according to the first aspect of the present invention are subject-matter of the respective dependent claims.

Furthermore, according to a second aspect of the present invention, the present invention refers to the use of the adhesive structure of the invention as defined in Claim 15.

To this end the adhesive structure in accordance with the invention comprises:
- a first and a second wall of flexible transparent polymer, each of which has an outer surface and an inner surface,
- an emulsion of liquid crystals between the inner surfaces of the first and the second wall,
- a transparent self-adhesive structure comprising an adhesive sensitive to pressure and resistant to UV, covering the outer surface of the second wall,
in which the self-adhesive structure is furthermore covered by a protective substrate which is siliconized on the side opposite the outer surface of the second wall.

The adhesive structure in accordance with the invention may also comprise a protective covering that covers the outer surface of the first wall.

The liquid crystal adhesive structure in accordance with the invention can be placed on an existing partition glass or on a transparent wall by virtue of the perfectly transparent pressure-sensitive adhesive without a significant loss of visibility. When a user intends to made a wall (glass, quartz, plastic) sometimes transparent, sometimes opaque, he merely needs to place the structure of the invention by means of simple pressure. The weight of the adhesive structure of the invention is very significantly reduced and therefore the placing is greatly simplified.

Like a rear-projection monitor, this structure is placed on a support of glass or of a synthetic or natural transparent material (Plexiglas, quartz) by adhesion with the aid of the adhesive. Then, when the image is projected from the rear, it diffuses through the liquid crystals in all directions. The liquid crystals, that are not subjected to an electrical field, assume a random orientation. The image obtained in this manner has a particularly elevated resolution due to the presence of liquid crystals in the adhesive structure in accordance with the invention, placed on the rigid support, and the image is visualized in an optimal manner without the observer having to be perfectly in front of the support.

In a preferred embodiment this self-adhesive structure comprises a layer of this pressure-sensitive adhesive with a thickness of 5 to 75 µm, preferably of 15 to 45 µm and more preferably of 20 to 30 µm.

Above this thickness the quality of the transparency is no longer acceptable.

This adhesive preferably comprises an absorber of UV, which allows the walls of the flexible, transparent polymeric structure to be protected against the action of UV, which is known to degrade plastic materials such as polyethylene terephthalate (PET).

In an advantageous embodiment of the invention this adhesive is selected from an adhesive with an acrylic base, an adhesive with a rubber base, an adhesive with a silicone base, an adhesive with a polyurethane base, their derivatives or their mixtures, in a base of organic solvents, in an aqueous base or also without solvent in the molten state, and more particularly this adhesive is selected from the group constituted by a self-adhesive resin self-cross-linkable under heat, based on an acrylic copolymer in solution in a mixture of organic solvents, a self-adhesive resin cross-linkable by the addition of isocyanate, a self-adhesive resin cross-linkable by the addition of aluminum acetylacetonate, a self-adhesive resin cross- linkable by the addition of titanium acetylacetonate, based on an acrylic copolymer, in solution in a mixture of organic solvents, the acrylic copolymers in aqueous dispersion.

The polymers with an acrylic base are preferred for combating UV while presenting a perfect transparency that therefore does not impair the visibility either through the structure when the liquid crystals are subjected to an electrical field or during the rear-projection of an image.

For example, this adhesive has a base of 2-ethylhexyl acrylate, of butyl acrylate, of vinyl acetate, of acrylic acid, of their isomers, derivatives or of their mixtures.

According to a preferred embodiment of the present invention, the adhesive may be selected from an adhesive with a non-rubber base, especially from an adhesive with an acrylic or methacrylic base (e.g. as described before). This type of adhesives exhibits an outstanding and even more improved transparency, resulting in the decisive advantage that the visibility through the structure as such is not impacted or affected by the self-adhesive structure, especially when the liquid crystals are subjected to an electrical field or during the rear-projection of an image.

Furthermore, this adhesive advantageously comprises one or several additives selected from the group constituted by adhesive resins, antioxidants, plasticizers, pigments and the like.

The adhesive structure of the invention furthermore comprises a protective substrate, coated with silicone, on this adhesive on the side opposite the outer surface of this second wall.

Moreover, the adhesive structure in accordance with the invention advantageously comprises the following on this adhesive on the side opposite the outer surface of this second wall;
- a silicone film with an average or elevated release value, that is, comprised between 5 and 200 centiNewton (cN)/25 mm according to the FINAT method No. 3 (FTM3), and more particularly between 20 and 150 cN/25 mm according to the FINAT method No. 3 (FTM3), and
- a permanent or removable adhesive, preferably removable.

In this advantageous embodiment in accordance with the invention the adhesive structure, used, for example, as a rear-projection monitor, can be removed and repositioned elsewhere indefinitely while ensuring an impeccable adhesion by the silicone layer with an average or elevated release layer.

In particular, particularly satisfying results were obtained with a silicone film with a release value of 30 cN/25 mm in accordance with FINAT method No. 3 (FTM3).

The term "release value" denotes "force necessary to separate (delaminate) the siliconized protector from the adhesivized front".

"FINAT method No. 3 (FTM3)" denotes a method that defines .the force required to separate the components of a self-adhesive complex at a constant angle of 180° and at a speed of 300 mm/minute. This force of anti adherence (delamination) is expressed in centiNewton 25 mm or 50 mm of width.

In particular, in a commercial gallery a rear-projection monitor should advantageously be able to be moved as a function of the promotion on display there or of the projected decoration, for example, during different events.

Another example is the use of the adhesive structure as a screen on which a theater or film declaration is rear-projected, given the elevated resolution of the rear-projected images.

In particular, this protective covering comprises one or several elements selected from the group constituted by a non-scratchable covering or by a non-reflecting covering.

In this manner the adhesive structure adhered on a transparent support is protected against scratches caused by walking by or by cleaning or comprises a matte covering in the form of a matte adhesive layer in order to avoid reflections.

In a particularly advantageous embodiment the adhesive structure in accordance with the invention comprises between these first and second walls on both sides of this emulsion a first and a second optically transparent electrode designed to be connected to a current source, which emulsion of liquid crystals is provided in order to achieve a particular ordered orientation that allows the light to pass under the effect of a voltage applied to these electrodes and in order to recover a random orientation opaque to light when the electrical voltage is cut out

In particular, this electrode is selected from a transparent organic electrode such as an electrode of PEDOTIPSS (poly-3-4-ethylene dioxythiophene / poly(styrene sulfonate) or a transparent mineral electrode such as a metallic electrode with zero valence such as Al, Ag, Au and analogous elements or an electrode of metallic oxides such as an electrode of indium oxide doped with tin or doped with zinc (SnO₂/In₂O₃, for example, at 1/9, or ZnO/In₂O₃).

Moreover, these first and second electrodes are connected in an advantageous manner to a voltage source by at least one pair of conductive elements comprising in particular an electrically conductive adhesive or a band of copper coated with an electrically conductive adhesive.

The structure in accordance with the invention preferably comprises a recess on a thickened area of this structure, extending halfway through it, in which this conductive element is arranged and is therefore put in contact with only one of the 2 transparent electrodes, the other of which was removed by the formation of this recess.

Furthermore, the structure in accordance with the invention advantageously comprises a tight peripheral seal.

According to a particular embodiment, the present invention refers to an adhesive structure with liquid crystals, especially as defined in any one of the previous claims, the adhesive structure comprising
- a first and a second wall of flexible transparent polymer, each of which has an outer surface and an inner surface,
- an emulsion of liquid crystals between these inner surfaces of this first and this second wall,
- a protective covering covering this outer surface of the first wall,
- a transparent self-adhesive structure comprising an adhesive sensitive to pressure, and resistant to UV, covering this outer surface of this second wall.

According to a particular embodiment of the present invention, the adhesive structure of the present invention has a total luminous transmittance, especially as measured according to ASTM D-1003, of at least 60 %, especially at least 65 %, preferably at least 70 %. Of course, these values refer to the non-opacified state, i.e. to the state without voltage (i.e. when the electrical voltage is cut out).

According to a particular embodiment of the present invention, the adhesive structure of the present invention has a degree of yellow, especially as measured according to DIN 6167, of less than 8.0, especially less than 4.0, preferably less than 2.0.

Other embodiments of the adhesive structure in accordance with the invention are mentioned in the attached claims.

The present invention also relates to a use of the liquid crystal adhesive structure in accordance with the invention on a transparent support or a partition glass such as a partition glass of a window, of a separating wall, of a shop window, of a vehicle, of frames and of any transparent surface, which partition glass consists of glass or of plastic.

Furthermore, the present invention relates to a use of the liquid crystal adhesive structure in accordance with the invention as a rear-projection monitor.

Other embodiments of the adhesive structure in accordance with the invention are indicated in the attached claims.

Other characteristics, details and advantages of the invention will be apparent from the description given below in a non-limiting manner and referring to the attached drawings.
- Figure 1: is a sectional view of an adhesive structure in accordance with the invention.
- Figure 2: is a sectional view of a self-adhesive structure to be applied on a flexible structure with liquid crystals.
- Figure 3: illustrates an embodiment of a process for the manufacture of the adhesive structure in accordance with the invention.
- Figure 4: illustrates a sectional view of a device of an adhesive structure in accordance with the invention in which the contacts between the electrodes of indium oxide doped with tin are connected together by an electrical conductive adhesive.
- Figure 5: illustrates a particular embodiment of the flexible structure in accordance with the invention connected to a current source.
- Figures 6a to 6d: illustrate a particular embodiment of the flexible structure in accordance with the invention joined to a current source.
- Figure 7a: is a particular embodiment of the seal of the adhesive structure in accordance with the invention.
- Figure 7b: is a variant of an embodiment of the adhesive structure in accordance with the invention at the level of the seal.
- Figure 8: illustrates a particular self-adhesive complex that can be used with a liquid crystal flexible structure for obtaining an adhesive structure in accordance with the invention that can be indefinitely reused.
- Figure 9: shows an adhesive structure in accordance with the invention that can be indefinitely reused and is used like a rear-projection monitor.

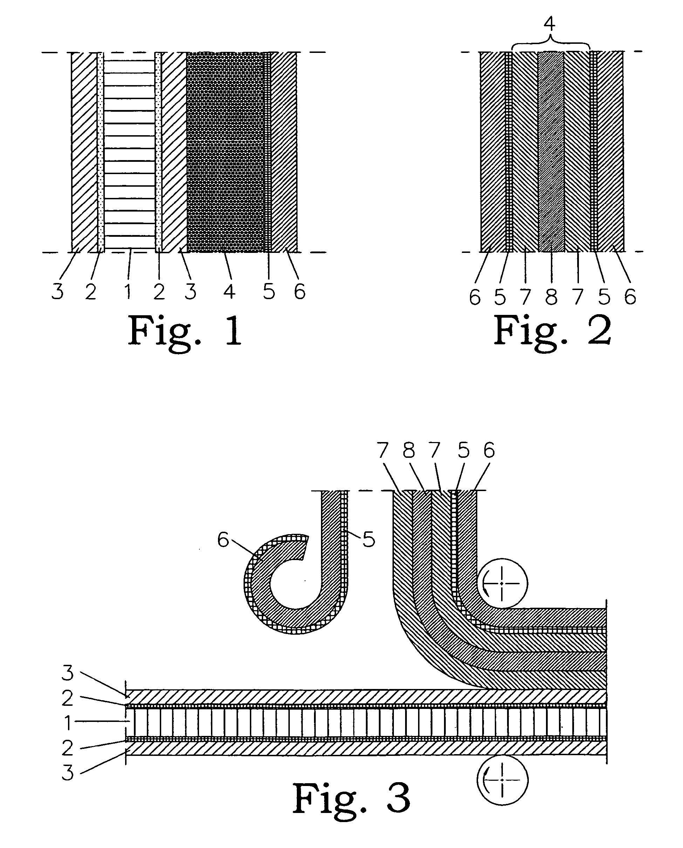

As can be seen in figure 1, the adhesive structure in accordance with the invention comprises a first and a second wall of flexible transparent polymer 3, more particularly of polyethylene terephthalate (PET) 175 micrometers thick. Each of these two films has an outer surface as well as an inner surface. Indium oxide doped with tin 2 was then deposited under a vacuum on the inner face of each first and second wall of polyethylene terephthalate in order to constitute transparent electrodes 2. Transparent electrodes 2 have a thickness of 200 nanometers and a resistivity of 100 ohms per square.

A transparent polymeric matrix 1 is located inside the two films of polyethylene terephthalate 3 (PET) and in contact with the transparent electrodes of indium oxide doped with tin 2, in which matrix droplets of liquid crystals are dispersed.

The liquid crystals are advantageously selected from the group constituted by nematic liquid crystals with positive dielectric isotropy, in particular liquid crystals of the type NCAP (nematic curvilinearly aligned phases) or of the type PDLC (polymer dispersed liquid crystal) and of cholesteric liquid crystals.

Furthermore, the adhesive structure in accordance with the invention comprises a transparent self-adhesive structure 4 comprising a layer of this adhesive sensitive to pressure 7, covered with a layer of silicone 5 on which a film of polyethylene terephthalate or of a protective polyester 6 is also applied. The unit constituted by the layer of silicone 5 (preferably 1 µm thick) and of the protective film 6 (preferably 36 µm thick) constitutes what is called the protective back 5 and 6 of the adhesive structure.

Under voltage, generally 110 alternating volts, the liquid crystals 1 are oriented along a privileged axis, which allows vision. When there is no voltage the liquid crystals are no longer aligned and the film becomes diffusing (milky), which prevents vision. The ordinary refractive index of the liquid crystals (Nₒ) should be equal to the index of the polymer of the matrix forming the emulsion of liquid crystals Nₚ.

As was mentioned previously, the polyethylene terephthalate film 3 of the flexible structure of liquid crystals that is exposed to the atmosphere when the product is applied on a substrate 13 (in general of glass) is preferably coated with an anti-scratch layer with a thickness of preferably 1 to 10 microns and more preferentially of 2 to 6 microns in order to avoid the formation of scratches on the polyethylene terephthalate surface 3 during various manipulations such as placement, cleaning, etc.

The adhesive structure in accordance with the invention is freed of its protective back constituted by the layer of silicone and of polyethylene terephthalate 5 and 6 and is applied on an existing transparent substrate 13 with the aid of simple pressure. This anti-scratch layer is generally composed of an acrylic resin or of different types of copolymers (acrylic, polyurethane, polyethylene terephthalate) cross-linkable by UV. These different resins that can be cross-linked by UV generally contain chemical agents such as nanoparticles of silica, of alumina and/or of zinc oxide, of silicone, of UV absorber, a cross-linking agent, and analogous chemical agents.

This layer, that generally has an organic solvent base, is coated on the polyethylene terephthalate film 3 with the aid of an engraved cylinder, dried in a thermal oven and then cross-linked under UV lights.

As was already mentioned previously, the flexible structure with liquid crystals (3, 2, 1) in accordance with the invention is rendered self-adhesive by the addition of a structure called self-adhesive structure 4. This self-adhesive structure covers the outer face of the second wall 3. Self-adhesive structure 4 is constituted by at least one adhesive layer sensitive to pressure 7 that is protected by a siliconized protective substrate constituted by layers 5 and 6 that have already been previously called the protective back. Adhesive layer 7 sensitive to pressure has a thickness comprised in the range running from 10 to 50 microns, preferably in the range running from 20 to 30 microns. This adhesive layer 7 sensitive to pressure should be resistant to ultraviolet radiation and have an optimal optical transparency.

Furthermore, it concerns an UV absorber that can act as an anti-UV filter and consequently protects polyethylene terephthalate films 3 as well as the emulsion of liquid crystals 1 from attack by ultraviolet rays.

This adhesive layer 7 can have an acrylic base, a base of rubber, silicone, polyurethane. They can also have a base of organic solvent, and aqueous base, without solvent, for example in the molten state. The self-adhesive resins that are self-cross-linking under heat, with a base of an acrylic copolymer in solution in a mixture of organic solvents, the self-adhesive resins that are cross-linkable by the addition of isocyanate or of aluminum acetyl acetonate or of titanium acetyl acetonate, based on an acrylic copolymer in solution in a mixture of organic solvent, the acrylic copolymers in aqueous dispersion, that preferably do not whiten upon contact with water are particularly preferred for forming the adhesive layer. The acrylic monomers preferable for this effect are 2-ethyl hexyl acrylate, butyl acrylate, vinyl acetate and acrylic acid.

These resins can contain one or several additives such as resins ensuring an adhesion, antioxidants, plasticizers, pigments and the like.

In a particular embodiment the adhesive layer can be directly coated at the liquid state, for example, in solution in an organic solvent or in a mixture of organic solvents, or also in emulsion in water or in solid form, that is, in the form of an adhesive without solvent that is poured hot on the film of polyethylene terephthalate of the complex of liquid crystals in accordance with the invention.

In a variant in accordance with the invention the adhesive layer can be transferred to the dry state on this same film of polyethylene terephthalate 3 described above (on the outer face of the second wall by means of a laminator on line or off line). Adhesive layer 7 could, of course, be of a permanent, semi-permanent or removable type.

By way of example the permanent adhesive M1319 (available from the MACtac Europe company) is particularly preferred because it has an optical transparency, a resistance to heat, a resistance to elevated UV and an effective anti-UV filter. The permanent acrylic adhesive M1319 is constituted by an acrylic copolymer with a very elevated molecular weight (whose molecular mass is approximately 1,000,000, in particular 970,000) in solution in a mixture of organic solvents (composed by ethyl acetate, acetone acetate and heptane acetate). This adhesive contains an antioxidant of the phenolic type with the chemical formula 1,3,5-trimethyl-2,4,6-tris(3,5-di-tert-butyl-4-hydroxybenzyl)-benzene.

Furthermore, this adhesive comprises a UV absorber with the chemical formula 2-(2H-benzotriazole-2-yl)-6-dodecyl-4-methylphenol as well as a cross-linking agent that is aluminum acetylacetonate in solution in a mixture of toluene, methanol and 2,4-pentanedione.

The viscosity at induction is 1400 cps and the dry extract represents 31.5% by weight relative to the moist weight of the above-mentioned adhesive formula.

As was mentioned previously, rendering the flexible structure with liquid crystals adhesive can be realized on line with a coating machine but also off line with the aid of a laminator.

Figure 2 shows a particularly preferred self-adhesive structure. In this embodiment the self-adhesive structure 4 comprises a second layer of adhesive sensitive to pressure 7 (for example, the adhesive M1319). A film of polyester or of ultra-transparent polyethylene terephthalate is arranged between the two adhesive layers 7.

Furthermore, two outer films of polyethylene terephthalate 6 with a preferred thickness of 36 microns and slightly milky are located on both sides of the adhesive layer sensitive to pressure 7. A film of silicone 5 with a preferred thickness of 1 micron is located on the inner face of each film of polyethylene terephthalate. This adhesive 7 sensitive to pressure, in particular the resin M1319 as previously described is located on each silicone face not in contact with the polyethylene terephthalate. This resin has a release value of 3 to 8 centiNewton/25 mm according to the FINAT No. 3 method (FTM3). During the course of the laminating process and as figure 3 describes, one of the protector backs composed by the film of polyethylene terephthalate 6 and of the silicone layer 5 is detached and rolled up on itself while exposed adhesive layer 7 is brought in contact by the laminator with the film of polyethylene terephthalate 3 of the second wall of the flexible structure with liquid crystals 1.

The siliconized protective substrate (5+6), also called the protective back, is generally constituted by a plastic film 6, for example, of polyester, with a thickness varying from 12 to 100 microns, preferably 25 to 40 microns, and siliconized on one face by a silicone layer 5 approximately 1 micron thick. The film of polyethylene terephthalate 6 does not necessarily have to have an ultraclear quality but can also be milky, as already mentioned above.

The choice of a plastic type protector of the PET (polyethylene terephthalate) type is dictated by the desire to obtain a silicone surface that is as smooth as possible and consequently a glazed advantageous surface obtained in return by an intimate contact with the ultrasmooth silicone layer. This glazed aspect of the surface of adhesive 7 permits an excellent optical transparency during its adhesion of a transparent substrate 15 such as a glass wall, a wall of Plexiglas or any other ultraclear, transparent plastic wall.

Protectors of the non-plastic type such as, for example, paper, can also be suitable but they result much more difficultly in the glazed mirror aspect desired for the adhesive structure.

As was already mentioned previously, the adhesive structure in accordance with the invention can not comprise an electrode indium oxide doped with tin in the particular case in which the adhesive structure in accordance with the invention is intended to be used placed on a wall of glass or of transparent Plexiglas in order to obtain a rear-projection monitor.

This particular use of the adhesive structure in accordance with the invention will be described in more detail below.

In another use of the adhesive structure in accordance with the invention the adhesive structure, placed on a wall of glass or of Plexiglas 15, permits the obention of a wall that is at times transparent, at times opaque. Numerous advantages are associated with such a wall, in particular in the case of conference rooms, doctors' offices, desktops requiring separations at certain sporadic moments, commercial shop windows, on the glass panels of ambulances, etc. There are numerous applications that cannot be clearly demonstrated.

In this case, in order that the product illustrated in figure 1 can be "active", that is to say, become transparent under light, it is necessary to apply an alternating voltage of 110 volts that will orient all the liquid crystals in the same direction and permit visibility through the adhesive structure in accordance with the invention. This voltage is therefore applied to the terminals of the two layers of indium oxide doped with tin 2 that enclose the emulsion layer of liquid crystals 1. The electrical connection on each terminal of the electrode indium oxide doped with tin is made by the apposition, in particular of a band of copper 9 coated with an electrically conductive adhesive simultaneously through its thickness (that is, along the axis generally called Z) and in its plane (plane determined by the X and Y axes).

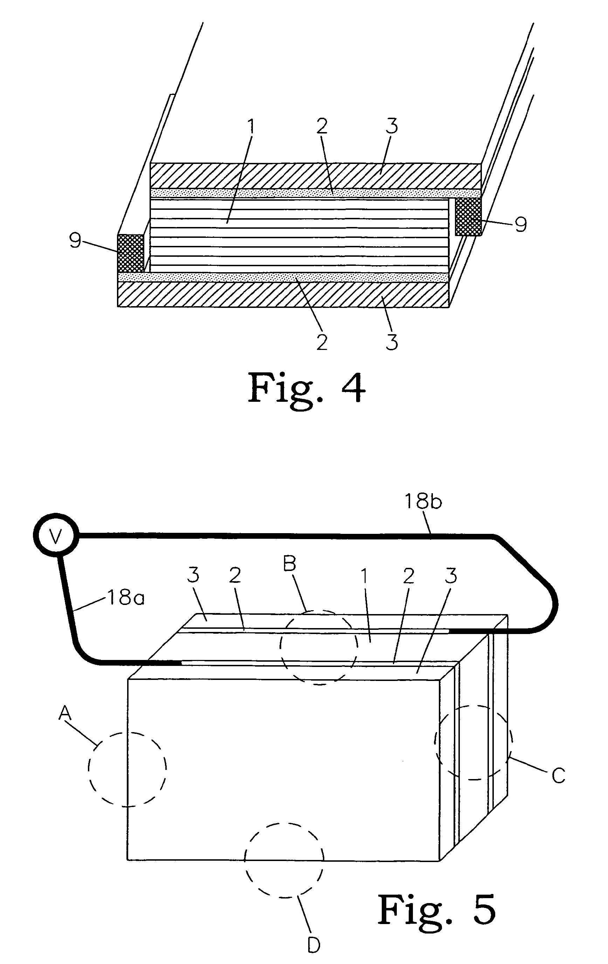

This is particularly illustrated in figure 4. These adhesives are generally charged in particles of nickel, silver or in carbon fibers. This type of electrically conductive adhesive band 9, placed in the X, Y, Z axes of the adhesive structure of the invention is commercially available, for example, from the companies 3M, E-SONG or also Full bond Tape Corp.

As can be seen from figure 4 the flexible structure with liquid crystals in accordance with the invention was milled halfway through. In figure 4 the flexible structure with liquid crystals was cut halfway on both sides of its thickness on the two opposite edges. In a variant the flexible structure with liquid crystals can be cut halfway through on both sides of the thickness on one half of the length of an edge. A conductive adhesive 9 is placed in the cut part on the surface of the electrode of indium oxide doped with tin 2. This halfway cut can be brought about either by machines with serrated wheels, in particular those sold by the Zünd (Switzerland) or Graphitronix (France) companies, or by machines using laser beams such as those sold by the Laser & Physics (Korea) company.

Given that the emulsion of liquid crystals 1 is sensitive to humidity when it is subjected to a voltage of approximately 110 alternating volts, it is necessary to seal the periphery of the flexible structure of liquid crystals with the aid of a product that is tight against humidity 10.

Figure 5 illustrates a flexible structure in accordance with the invention in which the electrodes of indium oxide doped with tin 2 are connected to an alternating electrical feed V.

The details of seal 10 are illustrated in figure's 6a, 6b, 6c and 6d. The sides comprising the conductive adhesive 9 permitting putting in contact the two electrodes of indium oxide doped with tin 2 are situated on sides A and C of the adhesive structure in accordance with the invention. Therefore, in this case seal agent 10 allows the tightness of the apparatus in accordance with the invention to be ensured.

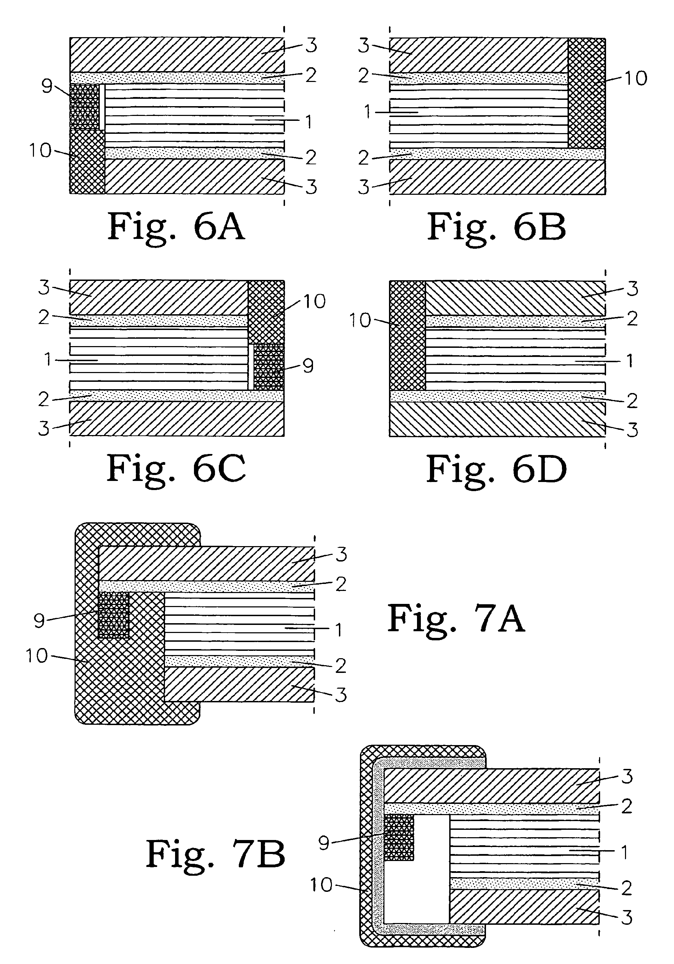

The conductive adhesive is not necessary on sides B and D. Therefore, on these sides, as can be seen in figures 6b and 6d, seal 10 maintains the insulation between the two electrodes and the outside.

Other types of covering by a sealing agent can be envisioned. These coverings by sealing agents are illustrated in figures 7a and 7b. The embodiment described in figure 7a is realized by soaking the flexible adhesive structure of the invention, that comprises liquid crystals, at a depth of approximately 7 mm in a bath containing the sealing agent 10. In figure 7b the sealing agent is constituted by the use of an adhesive specially designed to make a barrier against humidity, for example, an adhesive constituted by adhesive aluminum 10.

It should be noted that the sealing of edges B and D of figure 5 could be made simply by using a machine with jaws that would hot-seal the two edges not covered with electrically conductive adhesive. As concerns the chemical sealing agent like the one used in the embodiment shown in figure 7a, it is, for example, a chemical system photo-cross-linkable under light or, more generally, under UV. Such cross-linkable chemical systems can have an acrylic base, a base of silicone, of polyurethane or the like.

For sealing agent, very good results were obtained using silicone cross-linkable under UV (for example, the silicone system of the Momentive company). Such a silicone-based system is based on a resin photo-cross- linkable under UV that does not require an inert atmosphere.

The polymer UV 9400 (with a viscosity equal to 300 cp) was applied all along the edge to be sealed. 3% of photo-initiator UV 9390C was added to the polymer before its application. The edge coated with this silicone was placed under an UV lamp for 3 minutes (Phillips TL 20W/05; λ = 365 nanometers).

The flexibility of the cross-linked polymer was advantageously improved by adding polymer UV 9700 (with a viscosity of 5,000 cp) at the rate of 10 to 20% by weight relative to the total weight of the adhesive composition. Furthermore, the adhesion of the cross-linked polymer on the film of polyethylene terephthalate 3 was improved by adding an adhesive promoter to it (Anchorsil 9000 available from the Momentive company at the rate of 2 to 5% by weight).

When the system is fed by current in order to obtain an adhesive structure that is opaque at times and an adhesive structure that is transparent at times, the feed is realized with .the aid of an AC transformer with 220 volts/110 volts; 50/60 hertz generating a sinusoidal alternating voltage of 110 volts.

This sinusoidal voltage of 110 V is then transformed into a feed voltage of square waves whose amplitude is 110 V and the frequency 100 hertz (Hz).

In order to eliminate the capacitive effects of the CL system, a zero voltage is imposed for 1.7 milliseconds during the course of each inversion of polarity.

The putting under voltage is made by passage through 0 volts.

The voltage source of square waves V is connected on the one hand to the first electrode of indium oxide doped with tin 2 by means of a conductive wire 18a connected to the first copper band covered with conductive adhesive 9. On the other hand, the second electrode of indium oxide doped with tin 2 is connected to the voltage source V by another conductive wire (conventional) 18b connected to the second copper band covered with conductive adhesive 9.

In order to avoid any electrocution during the cleaning of the product placed on a window or if the adhesive structure with liquid crystals should be inadvertently pierced by an electrically conductive object (metallic, such as a pair of scissors or any other common object), a protection system, in particular a differential of 30 milliamperes, for example, specially designed for this purpose is placed at the input of the adhesive structure with liquid crystals.

The feed system (the alternating voltage source V) is advantageously provided with a protector against overvoltages as well as with a spark inhibitor. The adhesive structure in accordance with the invention is completely discharged when it is halted.

In a preferred embodiment the feed system can be put in operation or stopped with a remote control.

The electrical consumption of the adhesive structure with liquid crystals in accordance with the invention is 0.2 A/m².

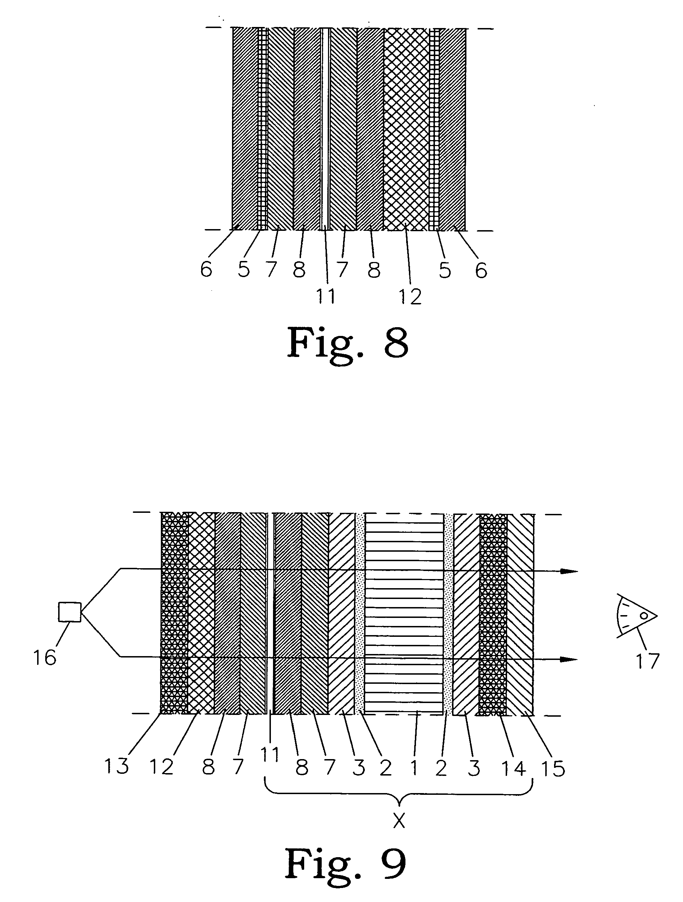

As previously mentioned and as is illustrated in figure 9 the adhesive structure in accordance with the invention can advantageously be used for rear projection. In this case, even if the electrodes of indium oxide doped with tin can be present, there are not necessary in any case.

For reasons of facilitating production, the same adhesive structure with liquid crystals can be produced and sold for rear projection or for manufacturing screens on glass plates that will be opaque at times and transparent at times. In this case, even if the adhesive structure with liquid crystals in accordance with the invention comprises perfectly transparent electrodes of indium oxide doped with tin 2 they are not, for example, connected to a feed source. Moreover, given that the liquid crystals are used in a non-oriented manner, that is, opaque, the fact that the electrodes were perfectly transparent is no longer particularly important. We speak in this case of an inactive embodiment of the adhesive structure in accordance with the invention that therefore does not require being placed under tension.

Of course, in certain applications the adhesive structure can be used for the two combined purposes by serving on the one hand as a back-projection monitor and on the other hand as an opaque or transparent separation screen (fixed or movable) as in conference rooms, seminar rooms or training rooms.

In the only inactive embodiment the adhesive structure in accordance with the invention does not necessarily comprise an electrically conductive adhesive nor a sealing system. Of course, the adhesive structure in accordance with the invention can comprise the copper and the electrically conductive adhesive as well as the sealing but this is not necessary in any case.

The advantage of using an adhesive structure with liquid crystals to be placed on a transparent surface such as a Plexiglas or a glass plate resides in the fact that not only do liquid crystals give a better definition of the image but in particular the image can be perfectly viewed whatever the angle of incidence. In fact, in this embodiment the viewing angle is practically 180 degrees.

Without voltage, the liquid crystals are oriented randomly and diffuse light in all directions in a homogeneous manner. Therefore, in accordance with the invention this product, that is called inactive, constitutes a marvelous rear-projection monitor.

Figure 9 shows a particular embodiment of the adhesive structure in accordance with the invention as a rear-projection monitor. As can be seen, an image is rear-projected with a rear projector 16 so that the observer 17 can view it in an optimal manner. In this embodiment the anti-scratch covering 15 previously mentioned was replaced by a self-adhesive product 14, 15 constituted by a transparent film of polyvinyl chloride 15, matte by 70 micrometers of thickness and provided on the back with a removable layer of adhesive.

This matte transparent film of polyvinyl chloride 15 is used in particular in the area of photography as an anti-reflection lamination product. This polyvinyl chloride also has a good resistance to scratches. Consequently, the application of such a film of the adhesive structure with liquid crystals in accordance with the invention allows the observer 17 to not be distracted by reflections coming from parasitic luminous sources from the direction of the observer 17.

The self-adhesive structure 4 used in the embodiment shown in figure 9 is illustrated in more detail in figure 8.

The adhesive structure of the invention, used as rear-projection monitor, comprises a permanent, semi-permanent or removable adhesive 7, as was previously seen, for example, in figure 1 or 2.

In the particularly preferred embodiment shown in figure 9 the rear-projection monitor can be infinitely reused, which means that it can be moved and subsequently repositioned as many times as the consumer desires.

The adhesive complex shown in figure 8 comprises a succession of the following layers:

The adhesive complex of figure 8 comprises two protective backs, each one constituted by a polyester film 6 with a thickness of 36 µm and slightly milky against which a silicone film 5 is present that has a thickness of 1 micrometer and a low release value.

By way of example, an acrylate silicone that can be cross-linked by UV is used under an atmosphere of nitrogen comprising a mixture of resin as well as a photo-initiator. When the first protective back is withdrawn, for example, in order to place the adhesive complex on the polyethylene terephthalate 3 of the flexible structure with the liquid crystals, the first adhesive layer 7 is exposed. The adhesive layer 7 is arranged on an ultra-clear film 8 of polyethylene terephthalate with, for example, a thickness of 36 µm, that adheres itself on a silicone filled with release value 11. The second adhesive layer 7 is located against this silicone film 11, which layer 7 is constituted by a permanent acrylic adhesive comprising an acrylic copolymer with an elevated molecular weight of approximately 10⁶ in solution in a mixture of organic solvents of ethyl acetate, acetone acetate and heptane acetate. This adhesive 7 furthermore comprises an antioxidant of the phenolic type, a UV absorber as well as a cross-linking agent such as was previously mentioned while referring to figure 1.

Then, another polyester film 8, that is ultraclear and preferably with a thickness of 36 micrometers, is located on this acrylic adhesive layer. For example, a silicone thermally cross-linkable by polyaddition (available from the Dow Corning company) comprising a polydimethyl siloxane provided with a cross-linking agent as well as a catalyst is used as silicone with an average or elevated release value. The other polyester film 8 is, for its part, covered by an adhesive layer 12 that is a removable or permanent or semi-permanent adhesive. The adhesive, preferably removable, is covered by the second peelable protective back of this compound of silicone film 5 of 1 micrometer with a low release value as previously mentioned as well as of a slightly milky polyester film 6. Such a very transparent product allows a transparent panel such as one of polycarbonate to be associated with a glass panel or any other panel of a transparent plastic material.

The preferred acrylic adhesive 7 in accordance with the 8 (M1319) has a release value of 3 to 8 cN per 25 mm FTM3. Moreover, silicone film 11 has an average release value comprised in the range of 20 to 40 cN per 25 mm according to the FINAT No. 3 (FTM3) method. The release value is preferably 30.

When the adhesive complex shown in figure 8 is placed on the adhesive structure in accordance with the invention, the assembly shown in figure 9 is obtained. As can be determined, the adhesive structure with liquid crystals was placed on an ultra-transparent wall 13 of glass or of plastic with the aid of the adhesive complex shown in figure 8.

As can be determined from figure 9, the elements constituting the block X can be detached from the rest by virtue of silicone film 11 with an average or elevated, preferably average release value.

Consequently, the flexible structure with liquid crystals in accordance with the invention and provided with its anti-reflection film 15 is recovered and can be placed on another substrate of glass or plastic via another adhesive complex such as mentioned in figure 8.

Of course, it is possible in accordance with the invention to obtain an active version of the rear-projection monitor. In this case, it is sufficient to use the structure shown in figure 6 and to place it on a substrate of glass or plastic with the aid of the complex shown in figure 8. This version could, for example, be profitably used on windows of administrative or company buildings or even store windows. It could also serve as an advertising screen. During the day, the product would function as an electronic curtain. Under voltage, the view through the glass substrate would be perfect on account of the transparency of the adhesive structure in accordance with the invention. When there is no voltage the light would be screened due to the opacity of the screen. In the evening, when daylight disappears, the voltage would be turned off in the system and it would be possible to project images, texts, advertisements from the inside of the building for the attention of passerbys in the street.

Moreover, these spaces dedicated to advertising could be programmed in time and for distance:

Of course, the present invention is not limited in any way to the embodiments described above and many modifications can be added to it without departing from the scope of the attached claims.

For example, the thicknesses of the different layers can vary as well as their composition as long as the necessary transparency is obtained. Likewise, in the figures the thicknesses of layers shown are arbitrary and should not be considered as limiting.

Specific samples were prepared as follows:

A first specimen A was prepared by coating both surfaces of a thin film of polyethylene terephthalate (PET) with a rubber-based pressure-sensitive adhesive. A second specimen B was prepared by coating both surfaces of a thin film of polyethylene terephthalate (PET) with an acrylic-based pressure-sensitive adhesive. The total luminous transmittance and the degree of yellow of each specimen were measured according to ASTM D-1003 and DIN 6167, respectively. The results are reported in the Table below:

| Specimen | Transmittance (%) | Degree of Yellow |
|---|---|---|
| A | 67.7 | 8.8 |
| B | 70.5 | 1.9 |

After further storage of the two specimens, the degree of yellow of specimen A remained unchanged whereas in the case of specimen B the degree of yellow continued to increase beyond the value of 8.8.

## Claims

1. An adhesive structure with liquid crystals comprising:
- a first and a second wall (3) of flexible transparent polymer, each of which has an outer surface and an inner surface,
- an emulsion of liquid crystals (1) between the inner surfaces of the first and the second wall (3),
- a transparent self-adhesive structure (4) comprising an adhesive sensitive to pressure (7) and resistant to UV, covering the outer surface of the second wall,
in which the self-adhesive structure (4) is furthermore covered by a protective substrate (5, 6) which is siliconized on the side opposite the outer surface of the second wall.

2. The adhesive structure with liquid crystals according to Claim 1, in which the adhesive structure further comprises a protective covering that covers the outer surface of the first wall.

3. The adhesive structure with liquid crystals according to Claim 1 or 2, in which the self-adhesive structure (4) comprises a layer of the pressure-sensitive adhesive (7) with a thickness of 5 to 55 µm, preferably of 15 to 45 µm and more preferably of 20 to 30 µm.

4. The adhesive structure with liquid crystals according to any one of Claims 1 to 3, in which the adhesive (7) comprises an absorber of UV.

5. The adhesive structure with liquid crystals according to anyone of Claims 1 to 4, in which the adhesive (7) is selected from an adhesive (7) with an acrylic base, an adhesive (7) with a rubber base, an adhesive (7) with a silicone base, an adhesive (7) with a polyurethane base, their derivatives or their mixtures, preferably in a base of organic solvents, in an aqueous base or also without solvent in the molten state, and more particularly the adhesive being selected from the group constituted by a self-adhesive resin self-cross-linkable under heat, based on an acrylic copolymer in solution in a mixture of organic solvents, a self-adhesive resin cross-linkable by the addition of isocyanate, a self-adhesive resin cross-linkable by the addition of aluminum acetylacetonate, a self-adhesive resin cross-linkable by the addition of titanium acetylacetonate, based on an acrylic copolymer, in solution in a mixture of organic solvents, the acrylic copolymers in aqueous dispersion.

6. The adhesive structure with liquid crystals according to Claim 5, in which the adhesive (7) has a base of 2-ethylhexyl acrylate, of butyl acrylate, of vinyl acetate, of acrylic acid, of their isomers, derivatives or of their mixtures.

7. The adhesive structure with liquid crystals according to any one of Claims 1 to 6, in which the adhesive (7) is selected from an adhesive (7) with a non-rubber base, especially from an adhesive with an acrylic or methacrylic base.

8. The adhesive structure with liquid crystals according to one of the previous claims, in which the adhesive (7) furthermore comprises one or several additives selected from the group constituted by adhesive resins, antioxidants, plasticizers, pigments and the like.

9. The adhesive structure with liquid crystals according to any one of the previous claims, in which the transparent self-adhesive structure (4) comprises two layers of the adhesive (7) sensitive to pressure between which an ultra-transparent film (8) of polyester or of polyethylene terephthalate is arranged.

10. The adhesive structure with liquid crystals according to any one of Claims 1 to 9, furthermore comprising on the adhesive (7) on the side opposite the outer surface of the second wall (3):
- a silicone film with an average or elevated release value that is comprised between 5 and 200 cN/25 mm according to the FINAT method No. 3 (FTM3), and more particularly between 20 and 150 cN/25 mm according to the FINAT method No.3 (FTM3), and
- a permanent or removable adhesive, preferably removable.

11. The adhesive structure with liquid crystals according to any one of the previous claims, in which the protective covering comprises one or several elements chosen from the group constituted by an anti-scratch covering and an anti-reflection covering (15).

12. The adhesive structure with liquid crystals according to anyone of the previous claims, comprising between the first and second walls (3) on both sides of the emulsion (1) a first and a second optically transparent electrode (2) designed to be connected to a current source (V), which emulsion of liquid crystals (1) is provided in order to achieve a particular ordered orientation that allows the light to pass under the effect of a voltage applied to the electrodes and in order to recover a random orientation opaque to light when the applied voltage is zero.

13. The adhesive structure with liquid crystals according to Claim 12, in which the electrode (2) is selected from a transparent organic electrode such as an electrode of PEDOTIPSS (poly-3-4-ethylene dioxythiophene/poly(styrene sulfonate) or a transparent mineral electrode such as a metallic electrode with zero valence such as Al, Ag, Au and analogous elements or an electrode of metallic oxides, especially an electrode of indium oxide doped with tin or doped with zinc (SnO₂/In₂O₃, especially, at 1/9, or ZnO/In₂O₃).

14. The adhesive structure with liquid crystals according to one of Claims 12 or 13, in which the first and second electrodes (2) are connected to a voltage source by at least one pair of conductive elements (9) comprising in particular an electrically conductive adhesive or a band of copper coated with an electrically conductive adhesive and/or comprising in particular a recess on a thickened area of the structure, extending halfway through it, in which the conductive element (9) is arranged.

15. The use of the adhesive structure with liquid crystals according to one of Claims 1 to 14 as a rear-projection monitor.

## Patentansprüche

1. Haftstruktur mit Flüssigkristallen, umfassend:
- eine erste und eine zweite Wandung (3) aus flexiblem transparentem Polymer, wobei jede jeweils eine Außenseite und eine Innenseite aufweist,
- eine Emulsion von Flüssigkristallen (1) zwischen den Innenseiten der ersten und der zweiten Wandung (3),
- eine transparente selbstklebende (haftklebrige) Struktur (4), umfassend einen selbstklebenden (haftklebrigen) bzw. druckempfindlichen (7) und UV-lichtbeständigen Klebstoff, welcher die Außenseite der zweiten Wandung bedeckt,
wobei die selbstklebende (haftklebrige) Struktur (4) weiterhin mit einer Schutzschicht (5, 6) bedeckt ist, welche auf der der Außenseite der zweiten Wandung gegenüberliegenden Seite silikonisiert ist.

2. Haftstruktur mit Flüssigkristallen nach Anspruch 1, wobei die Haftstruktur weiterhin eine Schutzabdeckung umfasst, welche die Außenseite der ersten Wandung bedeckt.

3. Haftstruktur mit Flüssigkristallen nach Anspruch 1 oder 2, wobei die selbstklebende Struktur (4) eine Schicht eines selbstklebenden (haftklebrigen) bzw. druckempfindlichen Klebstoffs (7) mit einer Dicke von 5 bis 55 µm, vorzugsweise von 15 bis 45 µm, besonders bevorzugt von 20 bis 30 µm, umfasst.

4. Haftstruktur mit Flüssigkristallen nach einem der Ansprüche 1 bis 3, wobei der Klebstoff (7) einen UV-Adsorber umfasst.

5. Haftstruktur mit Flüssigkristallen nach einem der Ansprüche 1 bis 4, wobei der Klebstoff (7) ausgewählt ist aus einem Klebstoff (7) auf Acrylatbasis, einem Klebstoff (7) auf Kautschukbasis, einem Klebstoff (7) auf Silikonbasis, einem Klebstoff (7) auf Polyurethanbasis, deren Derivaten oder Mischungen, bevorzugt in einer Basis aus organischen Lösungsmitteln, in einer wässrigen Basis oder auch ohne Lösungsmittel in schmelzflüssigem Zustand, und wobei der Klebstoff insbesondere ausgewählt ist aus der Gruppe von einem unter Erwärmung selbstvernetzenden haftklebrigen (selbstklebenden) Harz, basierend auf einem Acrylcopolymer in Lösung in einer Mischung aus organischen Lösungsmitteln, einem durch Zugabe von Isocyanaten vernetzbaren haftklebrigen (selbstklebenden) Harz, einem durch Zugabe von Aluminiumacetylacetonat vernetzbaren haftklebrigen (selbstklebenden) Harz, einem durch Zugabe von Titanacetylacetonat vernetzbaren haftklebrigen (selbstklebenden) Harz, basierend auf einem Acrylcopolymer, in Lösung in einer Mischung aus organischen Lösungsmitteln, Acrylcopolymeren in wässriger Dispersion.

6. Haftstruktur mit Flüssigkristallen nach Anspruch 5, wobei der Klebstoff (7) eine Basis aus 2-Ethylhexylacrylat, aus Butylacrylat, aus Vinylacrylat, aus Acrylsäure, aus deren Isomeren, Derivaten oder deren Mischungen aufweist.

7. Haftstruktur mit Flüssigkristallen nach einem der Ansprüche 1 bis 6, wobei der Klebstoff (7) ausgewählt ist aus einem Klebstoff (7), welcher keine Kautschukbasis aufweist, insbesondere aus einem Klebstoff auf Acryl- oder Methacrylbasis.

8. Haftstruktur mit Flüssigkristallen nach einem der vorangehenden Ansprüche, wobei der Klebstoff (7) weiterhin ein oder mehrere Additive, ausgewählt aus der Gruppe von Klebstoffharzen, Antioxidantien, Weichermachem, Pigmenten oder dergleichen, umfasst.

9. Haftstruktur mit Flüssigkristallen nach einem der vorangehenden Ansprüche, wobei die transparente selbstklebende (haftklebrige) Struktur (4) zwei Schichten des selbstklebenden (haftklebrigen) bzw. druckempfindlichen Klebstoffs (7) umfasst, zwischen welchen eine ultratransparente Folie (8) aus Polyester oder aus Polyethylenterephthalat angeordnet ist.

10. Haftstruktur mit Flüssigkristallen nach einem der Ansprüche 1 bis 9, weiterhin umfassend auf dem Klebstoff (7) an der der Außenseite der zweiten Wandung (3) gegenüberliegenden Seite:
- eine Silikonfolie mit einer mittleren oder erhöhten Haftkraft zwischen 5 und 200 cN/25 mm gemäß FINAT-Methode Nr. 3 (FTM3), vorzugsweise zwischen 20 und 150 cN/25 mm gemäß FINAT-Methode Nr. 3 (FTM3), und
- einen permanenten oder wiederablösbareren Klebstoff, vorzugsweise wiederablösbaren Klebstoff.

11. Haftstruktur mit Flüssigkristallen nach einem der vorangehenden Ansprüche, wobei die Schutzabdeckung ein oder mehrere Elemente, ausgewählt aus der Gruppe von einer kratzfesten Abdeckung oder einer entspiegelten Abdeckung (Antireflektionsabdeckung) (15), umfasst.

12. Haftstruktur mit Flüssigkristallen nach einem der vorangehenden Ansprüche, umfassend zwischen der ersten und zweiten Wandung (3) an beiden Seiten der Emulsion (1) eine erste und eine zweite optisch transparente Elektrode (2) zur Verbindung mit einer Stromquelle (V), wobei die Emulsion aus Flüssigkristallen (1) vorgesehen ist, um eine besonders geordnete Orientierung zu erreichen, welche den Durchtritt von Licht unter dem Effekt des Anlegens einer Spannung an die Elektroden erlaubt, und um eine zufällige Orientierung wiederherzustellen, welche undurchlässig für das Licht ist, wenn die angelegte Spannung Null beträgt.

13. Haftstruktur mit Flüssigkristallen nach Anspruch 12, wobei die Elektrode (2) ausgewählt ist aus einer transparenten organischen Elektrode, wie einer Elektrode aus PEDOTIPSS (Poly-3,4-ethylendioxythiophen/Polystyrolsulfonat), oder einer transparenten Mineralelektrode, wie einer nullwertigen metallischen Elektrode, wie Al, Ag, Au und analogen Elementen, oder einer Elektrode aus metallischen Oxiden, insbesondere einer Elektrode aus mit Zinn oder Zink dotiertem Indiumoxid (SnO₂/In₂O₃, insbesondere in einem Verhältnis von 1/9, oder ZnO/In₂O₃).

14. Haftstruktur mit Flüssigkristallen nach einem der Ansprüche 12 oder 13, wobei die erste und zweite Elektrode (2) mit einer Stromquelle über mindestens ein Paar leitfähige Elemente (9) verbunden ist, welche insbesondere einen elektrisch leitfähigen Klebstoff oder ein mit einem elektrisch leitfähigen Klebstoff beschichtetes Kupferband umfasst und/oder welche insbesondere eine Ausbuchtung in einem verdickten Bereich der Struktur umfasst, welche sich hindurch bis zu deren Mitte erstreckt, worin das leitfähige Element (9) angeordnet ist.

15. Verwendung der Haftstruktur mit Flüssigkristallen nach einem der Ansprüche 1 bis 14 als Rückprojektionsbildschirm.

## Revendications

1. Structure adhésive avec des cristaux liquides comprenant :
- une première et une deuxième paroi (3) de polymère transparent flexible, chacune présentant une surface externe et une surface interne,
- une émulsion de cristaux liquides (1) entre les surfaces internes de la première et de la deuxième paroi (3),
- une structure auto-adhésive transparente (4) comprenant un adhésif sensible à la pression (7) et résistant aux UV, couvrant la surface externe de la deuxième paroi,
dans laquelle la structure auto-adhésive (4) est en outre recouverte d'un substrat protecteur (5, 6) qui est siliconé du côté opposé à la surface externe de la deuxième paroi.

2. Structure adhésive avec des cristaux liquides selon la revendication 1, dans laquelle la structure adhésive comprend en outre un revêtement de protection qui recouvre la surface externe de la première paroi.

3. Structure adhésive avec des cristaux liquides selon la revendication 1 ou 2, dans laquelle la structure auto-adhésive (4) comprend une couche de l'adhésif sensible à la pression (7) ayant une épaisseur de 5 à 55 µm, de préférence de 15 à 45 µm et plus préférablement de 20 à 30 µm.

4. Structure adhésive avec des cristaux liquides selon l'une quelconque des revendications 1 à 3, dans laquelle l'adhésif (7) comprend un absorbant d'UV.

5. Structure adhésive avec des cristaux liquides selon l'une quelconque des revendications 1 à 4, dans laquelle l'adhésif (7) est choisi parmi un adhésif (7) comportant une base acrylique, un adhésif (7) comportant une base en caoutchouc, un adhésif (7) comportant une base en silicone, un adhésif (7) comportant une base en polyuréthane, leurs dérivés ou leurs mélanges, de préférence dans une base de solvants organiques, dans une base aqueuse ou également sans solvant à l'état fondu, et l'adhésif étant plus particulièrement choisi dans le groupe constitué d'une résine auto-adhésive auto-réticulable sous l'effet de la chaleur, basée sur un copolymère acrylique en solution dans un mélange de solvants organiques, d'une résine auto-adhésive réticulable par l'addition d'isocyanate, d'une résine auto-adhésive réticulable par l'addition d'acétylacétonate d'aluminium, d'une résine auto-adhésive réticulable par l'addition d'acétylacétonate de titane, basée sur un copolymère acrylique, en solution dans un mélange de solvants organiques, les copolymères acryliques en dispersion aqueuse.

6. Structure adhésive avec des cristaux liquides selon la revendication 5, dans laquelle l'adhésif (7) comporte une base d'acrylate de 2-éthylhexyle, d'acrylate de butyle, d'acétate de vinyle, d'acide acrylique, de leurs isomères, dérivés ou de leurs mélanges.

7. Structure adhésive avec des cristaux liquides selon l'une quelconque des revendications 1 à 6, dans laquelle l'adhésif (7) est choisi parmi un adhésif (7) comportant une base sans caoutchouc, en particulier parmi un adhésif comportant une base acrylique ou méthacrylique.

8. Structure adhésive avec des cristaux liquides selon l'une quelconque des revendications précédentes, dans laquelle l'adhésif (7) comprend en outre un ou plusieurs additifs choisis dans le groupe constitué des résines adhésives, des anti-oxydants, des plastifiants, des pigments et autres.

9. Structure adhésive avec des cristaux liquides selon l'une quelconque des revendications précédentes, dans laquelle la structure auto-adhésive transparente (4) comprend deux couches de l'adhésif (7) sensible à la pression entre lesquelles un film ultra-transparent (8) de polyester ou de téréphtalate de polyéthylène est agencé.

10. Structure adhésive avec des cristaux liquides selon l'une quelconque des revendications 1 à 9, comprenant en outre sur l'adhésif (7) du côté opposé à la surface externe de la deuxième paroi (3) :
- un film en silicone ayant une valeur de libération moyenne ou élevée qui est comprise entre 5 et 200 cN/25 mm conformément au procédé FINAT N° 3 (FTM3), et plus particulièrement entre 20 et 150 cN/25 mm conformément au procédé FINAT N°3 (FTM3), et
- un adhésif permanent ou détachable, de préférence détachable.

11. Structure adhésive avec des cristaux liquides selon l'une quelconque des revendications précédentes, dans laquelle le revêtement de protection comprend un ou plusieurs éléments choisis dans le groupe constitué d'un revêtement anti-rayure et d'un revêtement antireflet (15).

12. Structure adhésive avec des cristaux liquides selon l'une quelconque des revendications précédentes, comprenant entre la première et la deuxième paroi (3) des deux côtés de l'émulsion (1) une première et une deuxième électrode optiquement transparente (2) conçue pour être raccordée à une source de courant (V), laquelle émulsion de cristaux liquides (1) est prévue afin d'obtenir une orientation ordonnée particulière qui permet à la lumière de passer sous l'effet d'une tension appliquée sur les électrodes et afin de retrouver une orientation aléatoire opaque à la lumière lorsque la tension appliquée est nulle.

13. Structure adhésive avec des cristaux liquides selon la revendication 12, dans laquelle l'électrode (2) est choisie parmi une électrode organique transparente telle qu'une électrode de PEDOTIPSS (poly-3-4-éthylène dioxythiophène/poly(sulfonate de styrène) ou une électrode minérale transparente telle qu'une électrode métallique de valence zéro telle qu'une électrode à base des éléments Al, Ag, Au et analogues ou une électrode d'oxydes métalliques, en particulier une électrode d'oxyde d'indium dopé à l'étain ou dopé au zinc (SnO₂/In₂O₃, en particulier, à 1/9, ou ZnO/In₂O₃).

14. Structure adhésive avec des cristaux liquides selon l'une quelconque des revendications 12 ou 13, dans laquelle la première et la deuxième électrode (2) sont raccordées à une source de tension par au moins une paire d'éléments conducteurs (9) comprenant en particulier un adhésif conducteur ou une bande de cuivre revêtue d'un adhésif conducteur et/ou comprenant en particulier un évidement sur une zone épaissie de la structure, s'étendant sur la moitié de sa longueur, dans laquelle l'élément conducteur (9) est agencé.

15. Utilisation de la structure adhésive avec des cristaux liquides selon l'une quelconque des revendications 1 à 14 en tant qu'écran à rétro-projection.
